# EUROPÄISCHE PATENTANMELDUNG

(11) **EP 1 857 874 A1**
(43) Veröffentlichungstag der Anmeldung: **21.11.2007**
(21) Anmeldenummer: 07009916.3
(22) Anmeldetag: 18.05.2007
(51) Int. Cl.: G03B 21/54, G03B 21/10, A47B 37/02

(54) **Gestell für eine Projektionsvorrichtung**

(30) Priorität: 19.05.2006 DE 102006023908
(71) Anmelder: Anyma GmbH und Co Kg, 33100 Paderborn (DE)
(72) Erfinder: Bökamp, Robert, 33104 Paderborn (DE)
(74) Vertreter: Ostermann, Thomas

(57) **Zusammenfassung**

Die Erfindung betrifft ein Gestell für eine Mehrzahl von Projektionsvorrichtungen, die jeweils eine Projektionstafel, ein Projektionsgerät und eine mit der Projektionstafel und/oder dem Projektionsgerät gekoppelte Recheneinheit aufweisen, wobei eine Mehrzahl von Gestellelementen, an denen jeweils die Projektionstafel und das Projektionsgerät und die Recheneinheit gehaltert sind, miteinander verbunden sind, derart, dass die so gebildete Gestellbaueinheit selbsttragend ausgebildet ist.

## Beschreibung

Die Erfindung betrifft ein Gestell für eine Mehrzahl von Projektionsvorrichtungen, die jeweils eine Projektionstafel, ein Projektionsgerät und eine mit der Projektionstafel und/oder dem Projektionsgerät gekoppelte Recheneinheit aufweisen.

Es sind beispielsweise aus der DE 20 2005 016 926 U1 Projektionsvorrichtungen mit einer Projektionstafel und einem Projektionsgerät bekannt, wobei die Projektionstafel als interaktive elektronische Tafel (Whiteboard) ausgebildet ist. Bei magnetresonanzsensitiver Ausgestaltung der Projektionstafel können durch manuelles Verschieben eines Stiftes entlang der Tafeloberfläche Bilddaten eingegeben werden, die in einer Recheneinheit der Projektionsvorrichtung weiterverarbeitet und über verschiedenste Anzeigemittel angezeigt werden können. Zur Benutzung dieser Projektionsvorrichtungen ist in der Regel eine Schulung der Benutzer erforderlich.

Aufgabe der vorliegenden Erfindung ist es, ein Gestell für eine Mehrzahl von Projektionsvorrichtungen anzugeben, so dass mit geringem Montageaufwand eine Schulung von mehreren Personen in einem vorgegebenen Raum ermöglicht wird.

Zur Lösung dieser Aufgabe ist die Erfindung in Verbindung mit dem Oberbegriff des Patentanspruchs 1 dadurch gekennzeichnet, dass eine Mehrzahl von Gestellelementen, an denen jeweils die Projektionstafel und das Projektionsgerät und die Recheneinheit gehaltert sind, miteinander verbunden sind, derart, dass die so gebildete Gestellbaueinheit selbsttragend ausgebildet ist.

Der besondere Vorteil der Erfindung besteht darin, dass in einer relativ geringen Montagezeit eine selbsttragende Gestellbaueinheit aufgebaut werden kann, wobei die Komponenten der Projektionsvorrichtung, nämlich die Projektionstafel und das Projektionsgerät, in einer fest vorgegebenen Justierlage zueinander montierbar sind. Grundgedanke der Erfindung ist es, eine mobile Gestellbaueinheit vorzusehen, so dass diese an einem beliebigen Ort aufbaubar ist. Vorteilhaft können somit Schulungen an einem Ort stattfinden, an dem das zu schulende Personal üblicherweise arbeitet. Kosten für die Fahrt der zu schulenden Personen an einen festen Schulungsort können somit eingespart werden.

Nach einer bevorzugten Ausführungsform der Erfindung sind die Gestellelemente der Gestellaufbaueinheit jeweils derart ausgebildet, dass sie mehrere Längsstreben aufweisen, die durch Querstreben und/oder Diagonalstreben miteinander verbunden sind. Vorteilhaft werden hierdurch stabile Gestellelemente bereitgestellt.

Nach einer bevorzugten Ausführungsform der Erfindung weisen die Längsstreben eine vorgegebene Länge auf. Die vorgegebene Länge kann abhängig sein von dem üblicherweise gleichen Abstand zwischen dem Projektionsgerät und der ihm zugeordneten Projektionstafel. Vorteilhaft kann hierdurch die Montage erleichtert werden, da durch die Längsstrebe der Abstand zwischen dem Projektionsgerät und der Projektionstafel vorgegeben wird.

Nach einer Weiterbildung der Erfindung ist die Stellbaueinheit durch eine Mehrzahl von Vertikalsegmenten und eine Mehrzahl von Horizontalsegmenten gebildet. Vorteilhaft ergibt sich hierdurch eine rechtwinklige und relativ einfache und Platz sparende Konfiguration der Gestellbaueinheit.

Nach einer Weiterbildung der Erfindung verlaufen die Horizontalsegmente zu einem Kreuzungspunkt zusammen, an dem jeweils mindestens ein Projektionsgerät befestigbar ist.

Nach einer Weiterbildung der Erfindung sind das Projektionsgerät und/oder die Projektionstafel und/oder die Recheneinheit an vorgegebenen Befestigungsstellen über eine Klemme lösbar mit dem jeweiligen Gestellelement verbindbar. Vorteilhaft kann hierdurch eine relativ schnelle Montage erfolgen.

Nach einer Weiterbildung der Erfindung sind in den Gestellelementen jeweils ein Datenkabel zur Kommunikation zwischen den Komponenten der Projektionsvorrichtung und ein Stromkabel zum Betrieb der Komponenten der Projektionsvorrichtung integriert, wobei an den Stirnenden der Gestellelemente jeweils Anschlüsse vorgesehen sind. Eine elektrische Verbindung kann auf diese Weise einfach durch Steckverbindung der korrespondierenden Datenkabel bzw. Stromkabel erfolgen.

Ein Ausführungsbeispiel der Erfindung wird nachfolgend anhand der Zeichnungen näher erläutert.

Es zeigen:
- Figur 1: eine perspektivische Darstellung eines Gestells für eine Mehrzahl von Projektionsvorrichtungen,
- Figur 2: eine Draufsicht auf das Gestell gemäß Figur 1 und
- Figur 3: eine Seitenansicht eines Gestellelementes des Gestells.

Ein Gestell für eine Mehrzahl von Projektionsvorrichtungen 1 bildet eine mobile und selbsttragende Gestellbaueinheit 2, die aus einer Mehrzahl von Gestellelementen 3 zusammengesetzt ist. Die Gestellelemente 3 weisen jeweils vier Längsstreben 4 auf, die durch Querstreben 5 und Diagonalstreben 6 miteinander verbunden sind. Die Längsstreben 4, die Querstreben 5 und die Diagonalstreben 6 können beispielsweise rohrförmig ausgebildet sein.

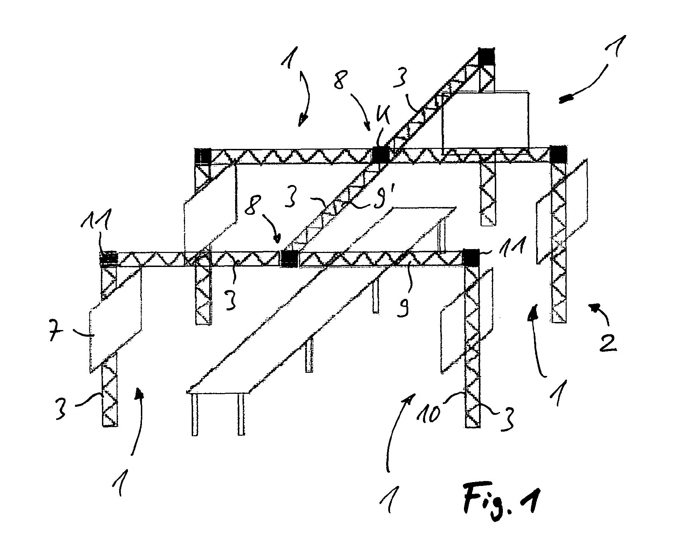

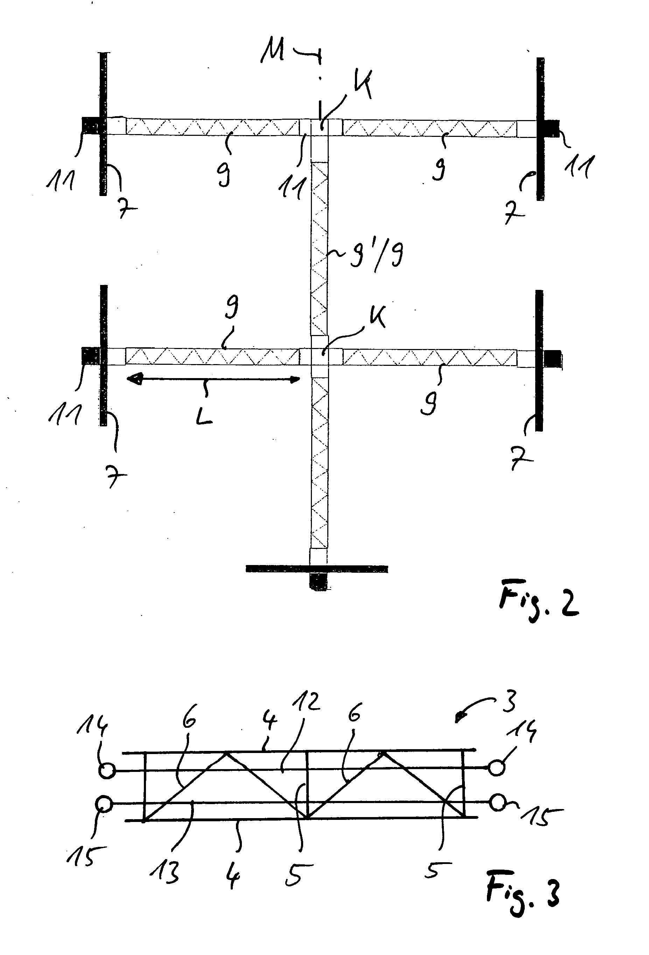

Das in Figur 1 und 2 dargestellte Gestell ist aus elf Gestellelementen 3 zusammengesetzt, wobei bestimmte oder alle Gestellelemente 3 jeweils eine gleiche Länge L aufweisen. Vorzugsweise beträgt die Länge L 3 m, was dem vorgegebenen Abstand zwischen einer Projektionstafel 7 und einem Projektionsgerät 8 der Projektionsvorrichtung 1 entspricht.

Im vorliegenden Ausführungsbeispiel weisen lediglich die in horizontaler Richtung verlaufenden Gestellelemente (Horizontalsegmente 9) eine Länge von 3 m auf, während die vertikal verlaufenden Gestellelemente (Vertikalsegmente 10) eine Länge von 2 m aufweisen.

Die Horizontalsegmente 9 und die Vertikalsegmente 10, die jeweils durch ein Gestellelement 3 gebildet werden, ermöglichen eine rechtwinklige Anordnung von Projektionsvorrichtungen 1, wobei vorzugsweise die Projektionsvorrichtungen 1 paarweise in einem Abstand zueinander gegenüberliegend bezogen auf eine vertikale Mittelebene M angeordnet sind. Die vertikale Mittelebene M verläuft durch ein mittleres Horizontalsegment 9', das mit den weiteren Horizontalsegmenten 9 einen Kreuzungspunkt K bildet. An den Kreuzungspunkten K sind über vorzugsweise C-förmige Klemmen die Projektionsgeräte 8 lösbar befestigt. Zur Verbindung der Vertikalsegmente 10 mit den anschließenden Horizontalsegmenten 9 sind Winkelverbindungselemente 11 vorgesehen, deren Schenkel eine Länge von beispielsweise 0,5 m aufweisen.

An den Vertikalsegmenten werden die Projektionstafeln 7 jeweils über vorzugsweise C-förmige Klemmen lösbar befestigt. Die Befestigung der Projektionstafeln 7 und der Projektionsgeräte 8 erfolgt an vorgegebenen Befestigungsstellen, die optisch gekennzeichnet sind. Wie aus Figur 3 ersichtlich ist, sind in den Gestellelementen 3 jeweils ein Datenkabel 12 zur Kommunikation der Komponenten der Projektionsvorrichtung 1 und ein Stromkabel 13 zum Betrieb der Komponenten der Projektionsvorrichtung 1 angeordnet. An den Enden des Datenkabels 12 bzw. des Stromkabels 13 sind Anschlüsse 14 zur Anbindung an Datenkabeln 12 bzw. Stromkabeln 13 benachbarter Gestellelemente 3 vorgesehen. Die Anschlüsse 14 befinden sich vorzugsweise im Bereich eines Stirnendes 15 der Gestellelemente 3.

Die Projektionstafel 7 und das Projektionsgerät 8 sind in einer festen Relativposition zueinander an den jeweiligen Gestellelementen 3 befestigt. Die Projektionstafeln 7 sind als elektronische Tafeln (Whiteboards) ausgebildet, die - wenn sie magnetresonanzsensitiv ausgebildet sind - zur Eingabe von Bilddaten mittels eines über die Oberfläche der Projektionstafel 7 streichenden Stiftes dienen. Diese Bilddaten werden in der Recheneinheit weiterverarbeitet oder abgespeichert, so dass Bilddaten auf einem Monitor oder über das Projektionsgerät 8 an die Projektionstafel 7 dargestellt bzw. projiziert werden können.

## Patentansprüche

1. Gestell für eine Mehrzahl von Projektionsvorrichtungen (1), die jeweils eine Projektionstafel (7), ein Projektionsgerät (8) und eine mit der Projektionstafel (7) und/oder dem Projektionsgerät (8) gekoppelte Recheneinheit aufweisen, **dadurch gekennzeichnet, dass** eine Mehrzahl von Gestellelementen (3), an denen jeweils die Projektionstafel (7) und das Projektionsgerät (8) und die Recheneinheit gehaltert sind, miteinander verbunden sind, derart, dass die so gebildete Gestellbaueinheit (2) selbsttragend ausgebildet ist.

2. Gestell nach Anspruch 1, **dadurch gekennzeichnet, dass** die Gestellelemente (3) jeweils mehrere Längsstreben (4) aufweisen, die durch Querstreben (5) und/oder Diagonalstreben (6) miteinander verbunden sind.

3. Gestell nach Anspruch 1 oder 2, **dadurch gekennzeichnet, dass** die Längsstreben (4) eine vorgegebene Länge (L) aufweisen.

4. Gestell nach einem der Ansprüche 1 bis 3, **dadurch gekennzeichnet, dass** die Gestellbaueinheit (2) mindestens ein Vertikalsegment (10) aufweist, an dem die Projektionstafel (7) und die Recheneinheit befestigt sind, und dass die Gestellbaueinheit mindestens ein Horizontalsegment (9') aufweist, an dem mindestens ein Projektionsgerät (8) befestigt ist.

5. Gestell nach einem der Ansprüche 1 bis 4, **dadurch gekennzeichnet, dass** mindestens drei Horizontalsegmente (9, 9') zu einem Kreuzungspunkt (K) zusammenlaufen, an dem mindestens ein auf die jeweilige Projektionstafel (7) ausgerichtetes Projektionsgerät (8) befestigt ist.

6. Gestell nach einem der Ansprüche 1 bis 5, **dadurch gekennzeichnet, dass** das Vertikalsegment (10) durch ein einziges Gestellelement (3) gebildet ist, an dem sich über ein Winkelverbindungselement (11) das Horizontalsegment (9, 9') anschließt.

7. Gestell nach einem der Ansprüche 1 bis 6, **dadurch gekennzeichnet, dass** das Projektionsgerät (8) und/oder die Projektionstafel (7) und/oder die Recheneinheit an vorgegebenen Befestigungsstellen über eine Klemme lösbar mit dem jeweiligen Gestellelement (3) verbindbar ist.

8. Gestell nach einem der Ansprüche 1 bis 7, **dadurch gekennzeichnet, dass** in dem Gestellelement ein Datenkabel (12) zur Kommunikation zwischen den Komponenten der Projektionsvorrichtung (1) und/oder ein Stromkabel zum Betrieb der Komponenten der Projektionsvorrichtung (1) integriert ist, wobei an den Enden des Datenkabels (12) bzw. des Stromkabels (13) Anschlüsse (14) vorgesehen sind zur Anbindung an ein Datenkabel (12) bzw. Stromkabel (13) eines benachbarten Gestellelementes (3), und dass sich der Anschluss (14) im Bereich eines Stirnendes (15) angeordnet ist.

9. Gestell nach einem der Ansprüche 1 bis 8, **dadurch gekennzeichnet, dass** die Projektionsvorrichtungen (1) paarweise und symmetrisch zu einer vertikalen Mittelebene (M) angeordnet sind.

10. Gestell nach einem der Ansprüche 1 bis 9, **dadurch gekennzeichnet, dass** in der Mittelebene (M) ein mittleres Horizontalsegment (9') verläuft, das senkrecht zu den jeweils den Projektionsvorrichtungen (1) verlaufenden Horizontalsegmenten (9) verläuft und mit denselben verbunden ist.
